Europäisches Patentamt

(19) European Patent Office

Office européen des brevets

(11) Publication number : **0 382 291 B1**

(12) **EUROPEAN PATENT SPECIFICATION**

(45) Date of publication of patent specification :
19.05.93 Bulletin 93/20

(51) Int. Cl.⁵ : **A23C 19/093**, A23C 19/082

(21) Application number : **90200229.4**

(22) Date of filing : **01.02.90**

(54) **Processed cheese and process for preparing such.**

The file contains technical information
submitted after the application was filed and
not included in this specification

(30) Priority : **09.02.89 EP 89200296**

(43) Date of publication of application :
**16.08.90 Bulletin 90/33**

(45) Publication of the grant of the patent :
**19.05.93 Bulletin 93/20**

(84) Designated Contracting States :
**AT BE CH DE DK ES FR GB GR IT LI NL SE**

(56) References cited :
**EP-A- 0 165 720
US-A- 3 697 292
US-A- 4 425 369
US-A- 4 459 313
PATENT ABSTRACTS OF JAPAN, vol. 6, no.
191 (C-127)(1069), 30th September 1982**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Greim, Peter**
**Max-Planck-Strasse 22**
**W-7913 Senden-Wullenstetten (DE)**
Inventor : **Praisler, Rosemarie**
**Gartenstrasse 28**
**W-7913 Senden (DE)**
Inventor : **Reichle, Karl-Heinz**
**Haselnussweg 17**
**W-7913 Senden (DE)**

(74) Representative : **Mulder, Cornelis Willem**
**Reinier, Dr. et al**
**UNILEVER N.V. Patent Division P.O. Box 137**
**NL-3130 AC Vlaardingen (NL)**

## Description

The present invention is concerned with a processed cheese comprising an oil of non-dairy origin which oil is low in saturated fatty acid residues, and with a process for preparing such a processed cheese. Throughout this application by processed cheese is meant a cheese product that is prepared by a process comprising the, not necessarily subsequent, steps of heating (generally to above 65°C) and emulsifying a cheese containing composition.

Commonly processed cheese is prepared by first selecting a suitable combination of raw cheese materials, which raw cheese, if necessary, is trimmed and thereafter subjected to cutting. After or during the cutting, emulsifying salt and water are added and subsequently the mixture is heated under agitation to a temperature of at least 65°C so as to change the coarsely dispersed casein-gel, through peptisation of the casein, into a homogeneous sol. After the heat treatment the plastic product may be homogenized and packaged. Depending on the ingredients chosen and the processing conditions employed, the processed cheese product obtained may, for instance, have the soft consistency of a spreadable product, i.e. a cheese spread, or the relatively hard consistency of a sliceable hard cheese. Generally processed cheese contains from 25 to 55 wt.% dry matter and less than 65 wt.% fat on dry matter.

US patent no. 3,310,406 relates to food products comprising at least 5% by weight vegetable oil containing polyunsaturated fats, at least 15% by weight protein-containing material, 2.5-70% by weight water, sufficient corn starch hydrolysate to act as a binder for said food product and metal salt in an amount of approximately 1%-4% by weight protein. It is observed in the patent that the protein may suitably be dry curd cottage cheese.

In US patent no. 3,697,292 it is described to prepare processed cheese comprising a minute amount of surface active agent. Amongst many other ingredients lecithin is also mentioned as a suitable surface active agent. It is said that the incorporation of a small amount of surface active agent may obviate the problems arising from the reprocessing of salvage process cheese.

In US patent 4459313 a method is described for the preparation of a processed cheese analog where are refrains from the use of natural cheese. A fat-free cheese analog is mixed with a selected fat and an emulsifier and then heated until a fluent mass is formed.

In EP-A 0 284 026 oil-in-water type emulsified fat compositions are described which are prepared by adding phosphatides, emulsifying salt and Gouda cheese to water, heating to 60°C so as to dissolve the cheese, adding fat and homogenizing.

We have found that a high quality processed cheese containing a substantial amount of non-dairy oil low in saturated fatty acid residues, may be obtained if said processed cheese contains an effective amount of a component selected from the group consisting of monoglycerides, diglycerides, phosphatides and mixtures thereof. Thus, in a first aspect, the present invention is concerned with a processed cheese comprising at least 10 wt.% of an oil of non-dairy origin and at least 0.1 % by weight of the triglycerides present in the processed cheese of a component selected from the group consisting of monoglycerides, diglycerides, phosphatides and mixtures thereof, the non-dairy oil containing less than 50% saturated fatty acid residues and the fat content of the processed cheese, calculated on dry matter, being less than 65 wt.%.

Here the percentage of saturated fatty acid residues is calculated on the total amount of fatty acid residues present in the non-dairy oil. Whenever reference is made to fatty acid residues in this application, unless indicated otherwise, what are meant are fatty acid residues present in digestible material, i.e. originating from, for instance, mono-, di- and triglycerides, as contrasted to fatty acid residues present in essentially indigestible materials like polyol fatty acid polyesters.

The processed cheese according to the present invention offers the advantage that it does not exhibit oil exudation. Furthermore the taste, appearance and consistency of the present cheese product are very alike processed cheese products which contain milk fat instead of oil of non-dairy origin.

In a preferred embodiment of the present invention the processed cheese contains at least 0.1% phosphatide by weight of the triglycerides present. When incorporating a sufficient amount of phosphatide into the present product, taste, appearance and consistency of such product will be essentially indistinguishable from conventional processed cheese products having the same composition but containing milk fat instead of oil of non-dairy origin.

The term phosphatide as used here encompasses monoacyl glycero phospholipids, diacyl glycero phospholipids and mixtures thereof. Examples of suitable phospholipids are phospatidyl choline, lyso-phosphatidyl choline, phosphatidyl ethanolamine and lyso-phosphatidyl ethanolamine.

In this specification, unless otherwise indicated, the term 'oil' refers to edible fatty substances in a general sense, including natural or synthesized fats and oils consisting essentially of triglycerides such as, for example, soybean oil, sunflower oil, palm oil, coconut oil, butter oil, fish oil, lard and tallow, which may have been fractionated, partially or completely hydrogenated, interesterified or modified otherwise, as well as non-toxic fatty

2

materials having properties similar to triglycerides, which materials may be indigestible, such as for example waxes, e.g. jojoba oil and hydrogenated jojoba oil, and polyol fatty acid polyesters. The terms oil and fat are deemed synonymous and therefore used interchangeably.

By an oil of non-dairy origin is meant an oil that is not derived from a milk product. Examples of suitable non-dairy oils are sunflower oil, soybean oil, corn oil, olive oil, rape seed oil, groundnut oil, cottonseed oil, safflower oil, maize oil and fish oil. Preferably the non-dairy oil present in the processed cheese according to the invention is a vegetable triglyceride oil, more preferably the non-dairy oil is selected from the group consisting of sunflower oil, soybean oil, rapeseed oil and mixtures thereof.

Preferably the non-dairy oil comprises a substantial amount of an oil that is essentially liquid, even at reduced temperatures. Accordingly the non-dairy oil preferably comprises at least 60 wt.% of an oil having a slip melting point of less than 20°C, more preferably of less than 15°C. The slip melting point of an oil or fat is defined here as the temperature at which the amount of solid phase in the melting fat has become so low that an air bubble is forced upwards in an open capillary filled with the fat.

In a preferred embodiment of the present invention the processed cheese comprises a substantial amount of an oil low in saturated fatty acid residues, as the consumption of relatively large amounts of such fatty acid residues is known to increase the cholesterol content of the blood and may thus promote the risk of heart and vascular diseases. Accordingly, in the processed cheese according to the invention, the saturated fatty acid residues, preferably, constitute less than 50%, more preferably less than 40% of the total amount of fatty acid residues. Furthermore, preferably, the poly unsaturated fatty acid residues constitute more than 15%, more preferably more than 35% of the total amount of fatty acid residues.

In a very preferred embodiment of the present invention the cheese product comprises poly unsaturated fatty acid residues and saturated fatty acid residues in a ratio of at least 1.5, more preferably in a ratio of at least 1.7.

In order to obtain a processed cheese product having an extremely high ratio of poly unsaturated to saturated fatty acid residues, we have found it beneficial to incorporate a blend of indigestible polyol fatty acid polyesters having a slip melting point of more than 37°C in combination with non-dairy oil having a slip melting of less than 10°C. The indigestible polyol fatty acid polyesters function as a so called hardstock but do not add to the saturated fatty acid content of the product according to the definition given hereinbefore. The utilization of such high melting indigestible polyol fatty acid polyesters enables the preparation of a processed cheese comprising poly unsaturated and saturated fatty acid residues in a weight ratio of more than 2.0. Preferably the indigestible polyol fatty acid polyesters are included at a concentration level in the range of 5 to 50 wt.%, preferably 7 to 20 wt.%, calculated on the non-dairy oil.

In yet another preferred embodiment of the present invention the processed cheese contains from 0.2 to 4%, more preferably from 0.3 to 3% phosphatide by weight of the triglycerides. The phosphatide present in the processed cheese, preferably, comprise from 20-80% monoacyl glycero phosphatides and 80-20% diacyl glycero phosphatides. We have found that the utilization of higher levels of phosphatide offers the advantage that the generation of oxidation off-flavours is retarded.

Generally the present processed cheese product comprises from 0.1 to 2 % by weight phosphatides, preferably the phosphatide content is within the range of 0.15 to 0.35 % by weight of the total product. According to another preferred embodiment at least 45 wt.%, preferably at least 50 wt.% of the phosphatides are insoluble in acetone.

The present processed cheese may suitably contain a substantial amount of water as well as a stabilizing agent. Such a stabilizing agent can be selected from the group consisting of emulsifying salts, gums and gelatine. Examples of suitable emulsifying salts are citrates, monophosphates and polyphosphates. Examples of gums that may usefully be incorporated in the present product are sodium carboxymethylcellulose, carrageenan, alginate, agar, pectin, tragacanth, guar gum. carob gum, gum arabic.

For all practical purposes the main ingredients of the processed cheese according to the invention are cheese material, non-dairy oil and water. Preferably the present cheese product comprises:
(a) 15 to 60 wt.% cheese material,
(b) 10 to 45 wt.% non-dairy oil,
(c) 15 to 65 wt.% water,
(d) 0.05 to 1 wt.% phosphatide and
(e) 0.05 to 5 wt.% stabilizing agent. In general the ingredients (a), (b) and (c) together constitute at least 75% by weight of the product.

According to a preferred embodiment the cheese material present in the cheese product comprises a substantial amount, i.e. at least 15 wt.%, preferably at least 40 wt.% of one or more low fat cheese products containing less than 15 wt.%, preferably less than 10 wt.% fat. The cheese material futhermore preferably comprises from 10-40 wt.% of semi-hard to hard cheese. Examples of semi-hard to hard cheese varieties that may suitably be incorporated in the present processed cheese are: Cheddar, Gouda, Emmentaler, Edammer, Gruyère, Tilsit, Trappist, Fontina and Provolone.

The processed cheese according to the present invention preferably has a dry matter content in the range of 25 to 55 wt.% and a fat content, calculated on dry matter, in the range of 20 to 60 wt.%, more preferably in the range of 30 to 58 wt.%.

Another aspect of the present invention is a process for preparing processed cheese, comprising the following processing steps:

(a) admixing at least 10 wt.% of the final product of an oil of non-dairy origin which oil contains less than 50% saturated fatty acid residues to cheese material including at least 15 wt.% of one or more low fat cheese products containing less than 15 wt.% fat,

(b) adding at least 0.1 wt.% of the triglycerides present of a component selected from the group consisting of monoglycerides, diglycerides, phosphatides and mixtures thereof and stabilizing agent,

(c) heating to a temperature of at least 60°C,

(d) adding water and

(e) emulsifying.

It is to be realized that these processing steps may be carried out in a different order and that some processing steps like the heating and emulsification may be carried out simultaneously.

In a preferred embodiment the present process comprises the admixture of 15 to 60 wt.% cheese material with 10 to 45 wt.% non-dairy oil and the addition of 15 to 65 wt.% water, 0.1 to 1 wt.% phosphatide and 0.05 to 5 wt.% stabilizing agent.

We have found it beneficial to incorporate a substantial amount of one or more cheese products of low fat content in order to arrive at a processed cheese product having an appropriate dry matter content and a suitable fat content in relation to the amount of dry matter. If, instead of low fat cheese, a cheese product containing, for instance, 45% fat on dry matter in combination with a considerably amount of non-dairy oil is incorporated into the processed cheese, the product obtained may contain more than 60 wt.% dry matter and more than 70 wt.% fat on dry matter. Products having so high a dry matter content and/or containing so much fat on dry matter, however, do not possess the texture and consistency that customers appreciate in conventional processed cheese products.

In the present process advantageously, contrary to normal practice, a substantial amount of the water is added after heating the cheese composition obtained by the admixture of cheese material, non-dairy oil, monoglyceride, diglyceride or phosphatide and stabilizing agent. If all the water is added before the heat treatment we have found it difficult to achieve a proper emulsification. Preferably at least 50 wt.% of the water is added after a first heating step, more preferably at least 80 wt.% of the water is added after said heating step.

Yet another aspect of the present invention is an alternative process for preparing processed cheese, comprising the following processing steps:

(a) preparing a filled milk containing from 1.2-40 wt.% of fat, the saturated fatty acid residues constituting less than 50% of the fatty acid residues present in said fat,

(b) coagulating the filled milk,

(c) separating the whey from the curd and pressing the curd,

(d) ripening,

(e) cutting the ripened cheese and optionally adding other cheese material,

(f) adding at least 10 wt.% of the final product of a non-dairy oil which oil contains less than 50% saturated fatty acid residues, at least 0.1 wt.% of the triglycerides present of a component selected from the group consisting of monoglycerides, diglycerides, phosphatides and mixtures thereof and stabilizing agent,

(g) heating to a temperature of at least 60°C and emulsifying.

The term cutting as used here means that cheese material is cut up to smaller pieces.

The filled milk employed in the present process may comprise up to 40 wt.% of fat. Although, according to normal terminology an aqueous composition comprising 40 wt.% of fat would rather be referred to as a filled cream, the term filled milk as used in the application also covers filled creams comprising as much as 40 wt.% of fat. Although the filled milk used in the present process may be concentrated to the fat and protein content desired in the finished product, preferably the filled milk comprises from 1.2-4.5 wt.% of fat. The coagulant applied in the present process preferably is rennet.

The filled milk utilized in the processes according to the invention preferably is prepared by injecting a fatty composition into an aqueous composition or vice versa, at a pressure difference of at least 6060 kPa. According to an even more preferred embodiment the aqueous composition is of dairy origin and essentially consists of, for example, skim milk, milk, buttermilk or whey. The fatty composition preferably essentially consists of vegetable fat.

In a preferred embodiment of the above mentioned two process alternatives, the process comprises the step of heating to a temperature of 110-150°C, said step being executed after the admixture of the non-dairy oil. The heating time at said temperature may suitably range from 2 seconds to 1 minute.

The invention is further illustrated by means of the following examples:

Examples 1-4

A number of spreadable processed cheese products of different composition were prepared by employing the following process:

The cheese materials used were trimmed, ground and subsequently brought into a Vögele ™ PS 200 processing cooker (80 kg charge) after which all ingredients, except for the water, were added. The contents of the processing cooker were heated to 70-75°C during 4 minutes while agitating so as to ensure that the fat is completely emulsified. After complete emulsification was achieved, 75% of the water was added and the cheese composition was further heated to 90°C and the remainder of the water was added. The composition was kept at that temperature while agitating at 90 rpm for about 1 minute and subsequently filled into tubs and sealed, or alternatively kept at that temperature and agitated for about 3 minutes, filled in triangular form and wrapped in thin metal foil.

Using the process described above, processed cheese products were prepared by incorporating the ingredients listed below.

| Ingredients (in wt.%) | 1 | 2 | 3 | 4 |
|---|---|---|---|---|
| Low fat cheese | 22.5 | 25.2 | 32.5 | 31.3 |
| Gouda 45% | 13.0 | 12.7 | | 12.7 |
| Chester 50% | | | 12.5 | |
| Non-dairy fat 1. | 22.9 | | | |
| Sunflower oil 2. | | 21.8 | 20.9 | 21.6 |
| Whey powder | 8.5 | 8.5 | 4.6 | 4.6 |
| Rennet casein | | | 0.5 | 1.5 |
| Emulsifying salt (E 331) | 2.1 | 2.1 | 2.1 | 2.1 |
| Sodium chloride | 0.4 | 0.4 | 0.7 | 0.4 |
| Bolec MT (E 322) 3. | 0.25 | 0.25 | 0.25 | 0.25 |
| Water | 30.6 | 29.0 | 26.3 | 25.6 |

1. the non dairy fat was a blend of (a) sunflower oil (86 wt.%) and (b) an interesterified mixture (14 wt.%) of palm oil and palm kernel oil (weight ratio 58:50). This blend contained 22% saturated and 61% poly unsaturated fatty acid residues.
2. Sunflower oil (11% saturated and 65% poly unsaturated fatty acid residues)
3. Phosphatide composition ex Loders Croklaan, Wormerveer, the Netherlands

The cheese ingredients used met the following specifications (PUFA = poly unsaturated fatty acid residues; SAFA = saturated fatty acid residues):

| | Dry matter | Fat | PUFA | SAFA |
|---|---|---|---|---|
| Low fat cheese 1. | 37-38% | 0-1% | 5% | 54% |
| Gouda 45% | 56-58 | 28-29 | 3 | 65 |
| Chester 50% | 62-63 | 32 | 5 | 63 |

1. the low fat cheese was of the Gouda-type. Edam- and Tilsit-type low fat cheeses were found to be suitable as well.

Products 1 to 3 were filled into tubs whereas product 4 was wrapped in aluminum foil (thickness 13 μm). In order to obtain the right consistency product 4 was prepared while using about 4% precooked cheese.

EXAMPLE 5

Processed cheese in the form of cheese slices was prepared by mixing together the following ingredients (identical to those mentioned in the above examples):

| Ingredients | wt.% |
| --- | --- |
| Low fat cheese | 36.0 |
| Gouda 45% | 13.0 |
| Sunflower oil | 20.5 |
| Milk protein | 7.1 |
| Emulsifying salt (E 331) | 1.7 |
| Sodium chloride | 1.4 |
| Bolec MT | 0.2 |
| Beta carotene | 0.008 |
| Water | 20.1 |

After the above ingredients had been brought together in a processing cooker, the combined components were thoroughly mixed by homogenizing for 7 minutes after which the temperature was raised to 84°C, while homogenizing. The temperature was kept at 84°C for 4 minutes after which the product was cooled down under vacuum to about 76°C and fed to a cooling drum (-5°C) so as to further process the processed cheese composition to cheese slices.

Examples 6-8

Spreadable processed cheese was prepared using formulation 3 and the process as described in Examples 1-4, with the exception that Bolec MT was replaced by other phosphatide compositions. The phosphatide compositions tested were Bolec ZTD, Bolec CM and Cetinol, which compositions were all obtained from Loders Croklaan, Wormerveer, the Netherlands.

The processed cheese obtained with Bolec ZTD was judged to be of the same quality as the processed cheese obtained with formulation 3 of Examples 1-4. The processed cheese products obtained with the other two phosphatide compositions were stable and had a good texture, but tasted slightly bitter.

Examples 9 and 10

Spreadable processed cheese was prepared using formulation 3 and the process as described in Examples 1-4, with the exception that Bolec MT was replaced by a monoglyceride composition. The monoglyceride compositions tested were Hymono 7804 and Hymono 8803, both ex Quest, Zwijndrecht, the Netherlands.

The processed cheese products obtained with the monoglyceride compositions had a good texture, but possessed a bitter taste.

Example 11

The processed cheese of formulation 3, described in Examples 1-4, as well as the processed cheese products of Examples 6-10 were prepared using the same process as described in these examples, and the same formulation, with the exception that the phosphatide and monoglyceride concentrations were increased to 0.4 % by weight. In the processed cheese products obtained with the phosphatide compositions a taste reminiscent of lecithin was perceptible. The processed cheese products containing monoglycerides had a clearly perceptible bitter taste.

Example 12

Example 11 was repeated with the exception that the phosphatide and monoglyceride concentrations were lowered to 0.15 % by weight. On storage the products produced oxidation off-flavours much more rapidly than products of the same formulation but containing higher levels of phosphatides or monoglycerides.

## Claims

1. Processed cheese comprising at least 10 wt.% of an oil of non-dairy origin and at least 0.1 % by weight of the triglycerides present in the processed cheese of a component selected from the group consisting of monoglycerides, diglycerides, phosphatides and mixtures thereof, the non-dairy oil containing less than 50% saturated fatty acid residues and the fat content of the processed cheese, calculated on dry matter, being less than 65 wt.%.

2. Processed cheese according to claim 1, wherein the saturated fatty acid residues constitute less than 50%, preferably less than 40% of the total amount of fatty acid residues.

3. Processed cheese according to claim 1 or 2, wherein the poly unsaturated fatty acid residues constitute more than 15%, preferably more than 35% of the total amount of fatty acid residues.

4. Processed cheese according to any one of claims 1-3, wherein the processed cheese contains from 0.2 to 4% phosphatide by weight of the triglycerides.

5. Processed cheese according to any one of claims 1-4, wherein the processed cheese comprises:
   (a) 15 to 60 wt.% cheese material,
   (b) 10 to 45 wt.% non-dairy oil,
   (c) 15 to 65 wt.% water,
   (d) 0.05 to 1 wt.% phosphatide and
   (e) 0.05 to 5 wt.% stabilizing agent.

6. Processed cheese according to claim 5, wherein the cheese material comprises at least 15 wt.% of one or more cheese products containing less than 15 wt.% fat.

7. Process for preparing processed cheese, comprising the following processing steps:
   (a) admixing at least 10 wt.% of the final product of an oil of non-dairy origin which oil contains less than 50% saturated fatty acid residues to cheese material including at least 15 wt.% of one or more cheese products containing less than 15 wt.% fat,
   (b) adding at least 0.1 wt.% of the triglycerides present of a component selected from the group consisting of monoglycerides, diglycerides, phosphatides and mixtures thereof and stabilizing agent,
   (c) heating to a temperature of at least 60°C,
   (d) adding water and
   (e) emulsifying.

8. Process for preparing processed cheese, comprising the following processing steps:
   (a) preparing a filled milk containing from 1.2-40 wt.% of fat, the saturated fatty acid residues constituting less than 50% of the fatty acid residues present in said fat,
   (b) coagulating the filled milk,
   (c) separating the whey from the curd and pressing the curd,
   (d) ripening,
   (e) cutting the ripened cheese and optionally adding other cheese material,
   (f) adding at least 10 wt.% of the final product of a non-dairy oil which oil contains less than 50% saturated fatty acid residues, at least 0.1 wt.% of the triglycerides present of phosphatide and stabilizing agent,
   (g) heating to a temperature of at least 60°C and emulsifying.

9. Process according to claim 7 or 8, wherein the process comprises the step of heating to a temperature of 110-150°C, said step being executed after the admixture of the non-dairy oil.

10. Process according to any one of claims 7-9, wherein the process comprises the admixture of 15 to 60 wt.% cheese material with 10 to 45 wt.% non-dairy oil and the addition of 15 to 65 wt.% water, 0.1 to 1 wt.% phosphatide and 0.05 to 5 wt.% stabilizing agent.

**Patentansprüche**

1. Schmelzkäse, umfassend mindestens 10 Gew.-% eines Öles von Nicht-Molkereiursprung und mindestens 0,1 %, bezogen auf das Gewicht der im Schmelzkäse vorliegenden Triglyceride, einer Komponente, die aus der aus Monoglyceriden, Diglyceriden, Phosphatiden und deren Mischungen bestehenden Gruppe ausgewählt ist, wobei das Nicht-Molkereiöl weniger als 50 % gesättigte Fettsäurereste enthält und der Fettgehalt des Schmelzkäses, berechnet auf Trockenmaterie, weniger als 65 Gew.-% beträgt.

2. Schmelzkäse nach Anspruch 1, worin die gesättigten Fettsäurereste weniger als 50 %, vorzugsweise weniger als 40 %, der Gesamtmenge der Fettsäurereste ausmachen.

3. Schmelzkäse nach Anspruch 1 oder 2, worin die mehrfach ungesättigten Fettsäurereste mehr als 15 %, vorzugsweise mehr als 35 %, der Gesamtmenge der Fettsäurereste ausmachen.

4. Schmelzkäse nach irgendeinem der Ansprüche 1 bis 3, worin dieser 0,2 bis 4 % Phosphatid, bezogen auf das Gewicht der Triglyceride, enthält.

5. Schmelzkäse nach irgendeinem der Ansprüche 1 bis 4, worin dieser umfaßt:
   (a) 15 bis 60 Gew.-% Käsematerial,
   (b) 10 bis 45 Gew.-% Nicht-Molkereiöl,
   (c) 15 bis 65 Gew.-% Wasser,
   (d) 0,05 bis 1 Gew.-% Phosphatid und
   (e) 0,05 bis 5 Gew.-% Stabilisator.

6. Schmelzkäse nach Anspruch 5, worin das Käsematerial mindestens 15 Gew.-% eines oder mehrerer Käseprodukte umfaßt, die weniger als 15 Gew.-% Fett enthalten.

7. Verfahren zur Herstellung eines Schmelzkäses, das die folgenden Verarbeitungsschritte umfaßt:
   (a) Einmischen von mindestens 10 Gew.-%, bezogen auf das Endprodukt, eines Öles von Nicht-Molkereiursprung, das weniger als 50 % gesättigte Fettsäurereste enthält, in ein Käsematerial, das mindestens 15 Gew.-% eines oder mehrerer Käseprodukte, wie weniger als 15 Gew.-% Fett enthalten, einschließt,
   (b) Zugeben von mindestens 0,1 Gew.-%, bezogen auf die vorliegenden Triglyceride, einer Komponente, die aus der aus Monoglyceriden, Diglyceriden, Phosphatiden und deren Mischungen bestehenden Gruppe ausgewählt ist, und eines Stabilisators,
   (c) Erwärmen auf eine Temperatur von mindestens 60°C,
   (d) Zugeben von Wasser und
   (e) Emulgieren.

8. Verfahren zur Herstellung von Schmelzkäse, das die folgenden Verarbeitungsschritte umfaßt:
   (a) Herstellen einer ergänzten Milch, die 1,2 bis 40 Gew.-% Fett enthält, wobei die gesättigten Fettsäurereste weniger als 50 % der im Fett vorliegenden Fettsäurereste ausmachen,
   (b) Koagulieren der ergänzten Milch,
   (c) Abtrennen der Molke vom geronnenen Material und Pressen des letzteren,
   (d) Reifen,
   (e) Schneiden des gereiften Käses und fakultatives Zugeben von anderem Käsematerial,
   (f) Zugeben von mindestens 10 Gew.-%, bezogen auf das Endprodukt, eines Öles von Nicht-Molkereiursprung, das weniger als 50 % gesättigte Fettsäurereste enthält, von mindestens 0,1 Gew.-%, bezogen auf die vorliegenden Triglyceride, eines Phosphatids und eines Stabilisators,
   (g) Erwärmen auf eine Temperatur von mindestens 60°C und Emulgieren.

9. Verfahren nach Anspruch 7 oder 8, worin dieses den Schritt des Erhitzens auf eine Temperatur von 110 bis 150°C umfaßt, wobei dieser Schritt nach dem Einmischen des Nicht-Molkereiöles durchgeführt wird.

10. Verfahren nach irgendeinem der Ansprüche 7 bis 9, worin dieses das Mischen von 15 bis 60 Gew.-% Käsematerial mit 10 bis 45 Gew-% Nicht-Molkereiöl und das Zugeben von 15 bis 65 Gew.-% Wasser, 0,1 bis 1 Gew.-% Phosphatid und 0,05 bis 5 Gew.-% Stabilisator umfaßt.

**Revendications**

1. Fromage fondu comprenant au moins 10% en masse d'une huile d'origine non laitière et au moins 0,1% en masse des triglycérides présents dans le fromage fondu sous forme d'un composant sélectionné à partir du groupe composé des monoglycérides, des diglycérides, des phosphatides et des mélanges de ceux-ci, l'huile non laitière contenant moins de 50% de résidus d'acide gras saturé et la teneur en matière grasse du fromage fondu, calculée par rapport à la matière sèche, étant inférieure à 65% en masse.

2. Le fromage fondu selon la revendication 1, dans lequel les résidus d'acide gras saturé représentent moins de 50%, de préférence moins de 40% de la quantité totale de résidus d'acide gras.

3. Le fromage fondu selon la revendication 1 ou 2, dans lequel les résidus d'acide gras polyinsaturé représentent plus de 15%, de préférence plus de 35% de la quantité totale des résidus d'acide gras.

4. Le fromage fondu selon l'une des revendications 1 à 3, dans lequel le fromage fondu contient de 0,2 à 4% en masse de phosphatide par rapport aux triglycérides.

5. Le fromage fondu selon l'une des revendications 1 à 4, dans lequel le fromage fondu comprend :
   (a) 15 à 60% en masse de matériau de fromage,
   (b) 10 à 45% en masse d'huile non laitière,
   (c) 15 à 65% en masse d'eau,
   (d) 0,05 à 1% en masse de phosphatide et
   (e) 0,05 à 5% en masse d'agent stabilisant.

6. Le fromage fondu selon la revendication 5, dans lequel le matériau de fromage comprend au moins 15% en masse d'un ou plusieurs produits de fromage contenant moins de 15% en masse de matière grasse.

7. Procédé pour préparer du fromage fondu, comprenant les étapes de traitement suivantes :
   (a) le mélange d'une quantité égale à au moins 10% en masse du produit final d'une huile d'origine non laitière contenant moins de 50% de résidus d'acide gras saturé avec le matériau de fromage contenant au moins 15% en masse d'un ou plusieurs produits de fromage à faible teneur en matière grasse contenant moins de 15% en masse de matière grasse,
   b) l'adjonction d'au moins 0,1% en masse des triglycérides présents sous forme d'un composant sélectionné à partir du groupe composé des monoglycérides, des diglycérides, des phosphatides et des mélanges de ceux-ci et d'un agent stabilisant,
   (c) le chauffage à une température d'au moins 60°C,
   (d) l'adjonction d'eau et
   (e) la mise en émulsion.

8. Le procédé pour préparer du fromage fondu, comprenant les étapes de traitement suivantes :
   (a) préparer un lait contenant un succédané contenant de 1,2 à 40% en masse de matière grasse, les résidus d'acide gras saturé représentant moins de 50% en masse des résidus d'acide gras présents dans ladite matière grasse,
   (b) coaguler le lait contenant un succédané,
   (c) séparer le lactosérum du lait caillé et presser le lait caillé,
   (d) laisser le fromage se faire,
   (e) couper le fromage bien fait et ajouter optionnellement d'autre matériau de fromage,
   (f) ajouter au moins 10% en masse du produit final d'une huile non laitière contenant moins de 50% de résidus d'acide gras saturé, au moins 0,1% en masse des triglycérides présents sous forme d'un composant sélectionné à partir du groupe composé des monoglycérides, des diglycérides, des phosphatides et des mélanges de ceux-ci et un agent stabilisant,
   (g) chauffer à une température d'au moins 60°C et émulsionner.

9. Le procédé selon la revendication 7 ou 8, dans lequel le procédé comprend l'étape de chauffage à une température de 110-150°C, ladite étape étant effectuée après le mélange de l'huile non laitière.

10. Le procédé selon l'une des revendications 7 à 9, dans lequel le procédé comprend le mélange de 15 à 60% en masse de matériau de fromage avec 10 à 45% en masse d'huile non laitière et l'adjonction de 15 à 65% en masse d'eau, 0,1 à 1 % en masse de phosphatide et 0,05 à 5 % en masse d'agent stabilisant.